# EUROPEAN PATENT SPECIFICATION

(11) **EP 2 112 733 B1**
(45) Date of publication and mention of the grant of the patent: **21.07.2010**
(21) Application number: 09380081.1
(22) Date of filing: 17.04.2009
(51) Int. Cl.: H02G 3/06

(54) **Raceway for electrical conductors and coupler applicable to said raceway**
Laufbahn für elektrische Leiter und auf besagte Laufbahn anwendbare Kupplung
Chemin pour conducteurs électriques et coupleur pouvant être appliqué audit chemin

(30) Priority: 25.04.2008 ES 200800861 U; 29.04.2008 ES 200800877 U
(43) Date of publication of application: 28.10.2009
(73) Proprietor: Unex Aparellaje Electrico S.L., 08903 L'Hospitalet de Llobregat (Barcelona) (ES)
(72) Inventor: Salcedo Suñol, Eloi, 08620 Sant Vincenc dels Horts (Barcelona) (ES)
(74) Representative: Curell Aguilà, Marcelino

(56) References cited:
- EP-A- 0 094 321
- EP-A- 0 933 850

## Description

### Field of the invention

This invention relates to a raceway for electrical conductors, in particular one of the type that is made by extruding synthetic plastics material and configured as a channel-shaped section made up of a bottom strip that is flanked orthogonally by two opposite, symmetrical walls, with respect to a middle plane perpendicular to the bottom strip, which form at the free end thereof a channel-shaped edge for fitting a cover section. The width of the bottom and the height of the walls can be variable, without said walls loosing their symmetry, so as to achieve a wide range of raceways

The raceways of this type, which the invention refers to, are organized so that they are provided with means to enable the firm attachment of, on the one hand, detachable cross members intended to retain the cables installed in the raceway and, on the other hand, the end of one raceway section with the end of another raceway section that is axially contiguous therewith..

The invention also relates to a coupler applicable for longitudinally attaching two contiguous raceways according to the invention.

### State of the art

Document ES2126202T3 discloses a coupling system between contiguous raceways wherein the coupler consists of a flattened, oblong element that adjusts to the raceway by means of the elastic fit of two longitudinal flanges, one bottom and one top, which are elastically flexible in the transverse direction, with said coupler having a central elastic tongue provided at its free end with a biselled nail that performs an end stop function between two raceways, two pins flanking the opening through which the elastic tongue appears, and which act as friction braking elements against the raceway wall, and end flanges that function as manoeuvring means.

Document ES2188445T3 discloses a coupling system between contiguous raceways wherein the coupler consists of a part that is elastic in vertical direction and attaches to the raceway walls by sliding and elastic adjustment through a central bottom area defined by meandering-shaped incisions, with a retention heel being arranged in said central bottom area, which cooperates with a strip provided in the raceway, said raceway also being provided with a parking notch, which has a ramp that ascends towards the immediate coupling end of the raceway, and a working notch, with said notches forming consecutive housings for the retention heel.

These known coupling systems suffer from the drawback that they use coupling elements that are complicated to manufacture. In the case of the coupling disclosed in document ES2188445T3, there is an additional drawback in that it is necessary to machine the ends of the raceway strips to shape the parking notch and the working notch.

### Disclosure of the invention

In order to avoid the above-described drawbacks, and provide a longitudinal, raceway coupling element that is easy to manufacture and use, the solution has been adopted to provide the coupling element with a straight section that enables it to fit into some relieves in the raceway, obtained in the same extrusion operation of said raceway .

According to the preceding solution, the raceway according to the invention has been developed, which consists of a raceway of the type indicated at the beginning, **characterized in that** the top end of each opposite wall has an inclined marginal area that is tilted upwards towards the inside of said raceway, and at the side ends of the bottom strip, near the intersection between said bottom strip and the bottom section of each of said opposite walls, a wedge-shaped projection is arranged having its inclined side tilted towards the middle plane of said bottom strip and its short side parallel to the bottom portion of said wall and coplanar with a small partition that emerges, parallel to said wall, from the inner face of said inclined marginal area.

Preferably, said small partition is provided, on its face which looks towards the inner face of the wall, with a toothed form which has its apices pointing towards said inner face.

Also, according to the preceding solution, the coupler according to the invention has been developed, suitable for longitudinally coupling two of said contiguous raceways according to the invention, **characterized in that** it is made up of an oblong part with an "L"-shaped section and which has, on the top edge of the larger portion of said "L"-shaped section, elastic flanges shaped by the actual form of the material making up said oblong part, with the bottom edge of said larger portion intersecting with the smaller portion of said "L"-shaped section, which smaller portion is made up of an inclined portion, which joins said larger portion above the bottom edge of the latter so as to form a heel, and a flat seating portion.

Preferably, at a medium height of said larger portion of the "L"-shaped section, a horizontally lying window is made, provided with two leaves that project elastically from the plane of said larger portion.

### Brief description of the drawings

To facilitate the understanding of the foregoing ideas, some preferable embodiments of the invention are described below, consisting of a raceway for electrical conductors and a coupler applicable to longitudinally coupling two of said contiguous raceways, with reference to the accompanying drawings which, given their purely illustrative character, do not affect the scope of the invention, in which drawings:
Fig. 1 is a straight cross-section of a raceway for electrical conductors made according to the characteristics of the object of the invention.
Fig. 2 is a perspective view of a coupler according to the invention, seen from its face looking towards the inside of the raceway.
Fig. 3 is a perspective view of the coupler made according to the object of the invention, seen from its face that must back onto the raceway wall.
Fig. 4 is a view of the edge of one end of the coupler in the preceding figures.
Fig. 5 is a lateral view of a raceway like the one in Fig. 1 wherein, in one of its side walls, a coupler according to the invention is being installed, while in the other wall, the coupler has already been installed.
Fig. 6 is a longitudinal view of the coupling of two raceways showing the position of the coupler installed in one of the raceways, and one that is ready to be installed in the other raceway.

### Detailed description of some embodiments of the invention

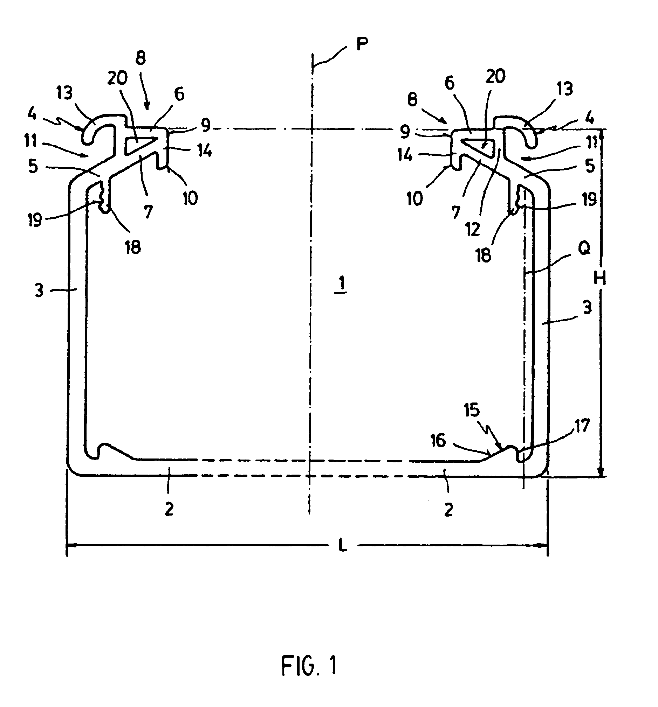

Fig. 1 shows a raceway 1 for laying electrical conductors that is one of the known type, particularly one of the type that is made by extruding a synthetic plastics material and configured as a channel-shaped section made up of a bottom strip 2 that is flanked orthogonally by two equal opposite walls 3 that form at their free end a channel-shaped edge 4 for fitting a cover section ( not shown), wherein the width of the bottom L and the height H of the walls can be variable, without said walls losing their specular symmetry with respect to a plane that is central and perpendicular to the bottom strip 2, all for the purpose of achieving a wide range of dimensions for raceway.

On the top face of an inclined marginal area 5 at the top end of each wall 3 of raceway 1, which is tilted inwards and upwards, with relative specular symmetry with respect to a middle plane P perpendicular to bottom strip 2, a seating flap 6 is arranged that is parallel to said bottom strip 2 and which forms, with an extension 7 of said inclined marginal area 5 and with the channel-shaped edge 4, a tubular section 8 in cantilever arrangement from the free end 9 of which there emerges an anchoring wing 10 that is perpendicular to said bottom strip 2.

The top portion of the free edge of walls 3 comprises marginal area 5 tilted towards the inside of raceway 1 with the aim of establishing a space 11 for locating the channel-shaped edge 4, which is formed by a straight portion 12 followed by a portion 13 arched towards the outside, which, as it is open towards said inclined marginal area 5 and projects over said inclined marginal area 5 without projecting out of it, is complementary to the edge of a closing cover for the raceway (not shown), while said straight portion 12 of channel-shaped edge 4, that emerges from said inclined marginal area 5, extends in a flat, horizontal seating flap 6 that emerges orthogonally from the back of said straight portion 12, so that its cantilever edge coincides together with the cantilever end of inclined marginal area 5 in a narrow, vertical slat 14 that extends into short anchoring wing 10 in cantilever arrangement towards bottom strip 2. Inclined marginal area 5 of the free end of walls 3, straight section 12 of the channel-shaped edge 4 and seating flap 6 define a hollow space 20 with a triangular section.

Essentially the object of the invention lies in the fact that on one part of the edge of bottom strip 2, that is next to the intersection thereof with the bottom portion of wall 3, a wedge shaped projection 15 is provided having its inclined side 16 tilted towards the centre of bottom strip 2 and its short side 17, which is parallel to the bottom portion of wall 3, lying in a plane Q which, while also being parallel to said wall 3, coincides with a small partition 18 that emerges from the inner face of inclined marginal area 5 on the free end of said wall 3 of raceway 1, and is parallel to said wall 3.

As can be seen in Fig. 1, small partition 18, which is parallel to the inner face of the contiguous wall of the raceway, has on its face that looks towards said inner face of wall 3 a toothed form 19 that has its apices pointing towards said face.

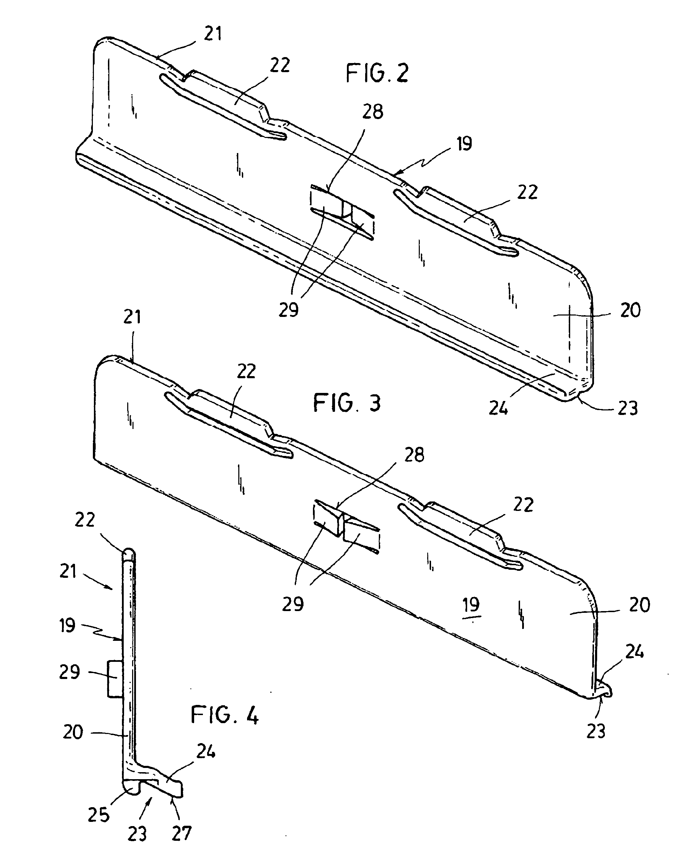

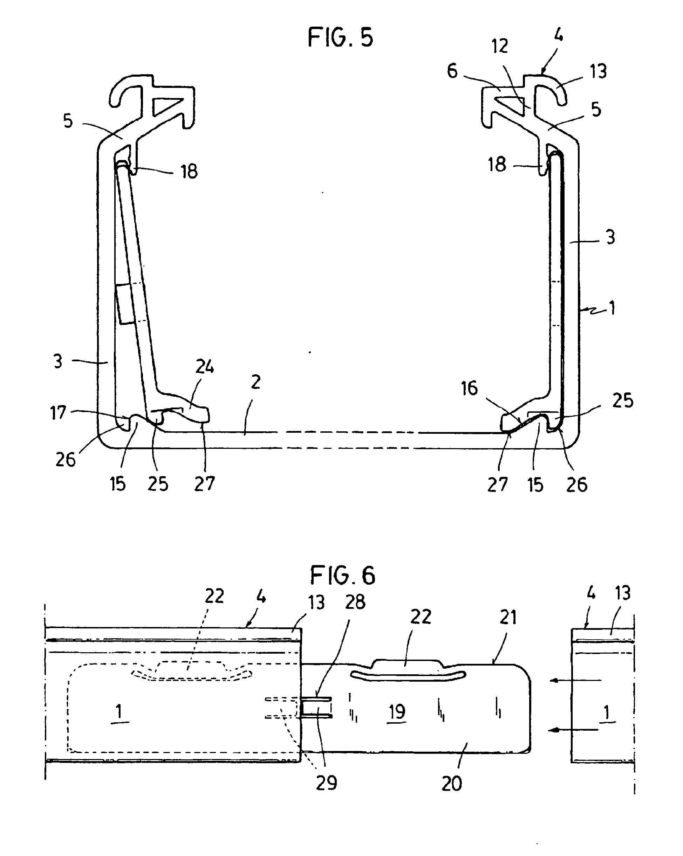

The coupler according to the invention, intended to longitudinally couple two contiguous raceways 1 like the ones in Fig. 1, is shown on its own in Figs. 2 to 4. Figs. 5 and 6 show the attachment between two raceways 1 by means of said coupler.

Coupler 19 according to the invention is made up of an oblong part 20 that has an "L"-shaped straight section and, on the top edge of the larger portion 21 of said "L"-shaped section, it has elastic flanges 22 shaped by the actual form of the material making up oblong part 20, while the bottom edge of said larger portion 21 intersects with the smaller portion 23 of said "L"-shaped section, which smaller portion 23 is made up of an inclined portion 24, which coincides dimensionally with the tilted side of wedge-shaped projection 15 lying on bottom strip 2 of raceway 1, and which joins said larger portion 21 above the bottom edge of the latter so as to form a heel 25 that coincides dimensionally with groove 26 formed between the short side 17 of said wedge-shaped projection 15 and immediate wall 3 of raceway 1, and a flat seating portion 27 that sits on bottom strip 2 of raceway 1, while at a medium height of said larger portion 21 a horizontally lying window 28 is formed, provided with two leaves 29 that project elastically from the plane of said larger portion 21.

Fig. 5 shows the installation phase of coupler 19 in one of the walls 3 of raceway 1, while in the other wall coupler 19 is already installed. Elastic flanges 22 fit between small partition 18 and the inner face of wall 3, while heel 25 fits into groove 26 formed between short side 17 of projection 15 and wall 3.

Fig. 6 shows the position of coupler 19 installed in one of the raceways 1 and ready to be installed in the other raceway 1, contiguous to the first. In said Fig. 6 the abutment position adopted by one of the leaves 29 of window 28 is shown, so that oblong part 20 is positioned centrally, thus preventing it from moving when the second raceway 1 is installed.

## Claims

1. Raceway for electrical conductors, said raceway (1) being made by extruding a synthetic plastics material and being configured as a channel-shaped section made up of a bottom strip (2) flanked orthogonally by two opposite walls (3), that are symmetrical with respect to a middle plane which is perpendicular to said bottom strip (2), said opposite walls (3) forming on their free end a channel-shaped edge (4) for fitting a cover section, **characterized in that** the top end of each of said opposite walls (3) has an inclined marginal area (5), that is tilted upwards and towards the inside of said raceway (1), and at the side ends of said bottom strip (2), near the intersection of said bottom strip (2) with the bottom portion of each of said bottom walls (3), a wedge-shaped projection (15) is arranged having its inclined side (16) tilted towards the middle plane of said bottom strip (2) and its short side (17) parallel to the bottom portion of said wall (3), and coplanar with a small partition (18) that emerges from the inner face of said inclined marginal area (5) parallel to said wall (3).

2. Raceway for electrical conductors according to claim 1, **characterized in that** said small partition (18) has, on its face that looks towards the inner face of said wall (3), a toothed form (19) with its apices pointing towards said inner face.

3. Coupler suitable for longitudinally coupling two contiguous raceways (1) according to claims 1 or 2, **characterized in that** it is made up of an oblong part (20) that has an "L"-shaped straight section and, on the top edge of the larger portion (21) of said "L"-shaped section, it has elastic flanges (22) shaped by the actual form of the material making up said oblong part (20), with the bottom edge of said larger portion (21) intersecting with the smaller portion (23) of said "L"-shaped section, which smaller portion (23) is made up of an inclined portion (24) that joins said larger portion (21) above the bottom edge of the latter so as to form a heel (25), and a flat seating portion (27).

4. Coupler according to claim 3, **characterized in that,** at a medium height of said larger portion (21) of the "L"-shaped section, a horizontally lying window (28) is formed, provided with two leaves (29) that project elastically from the plane of said larger portion (21).

## Patentansprüche

1. Kabelkanal für elektrische Leitungen, welcher durch Extrudieren eines synthetischen Kunststoffmaterials mit einem kanalförmigen Profil hergestellt ist, das einen Bodenstreifen (2) aufweist, der von zwei rechtwinklig verlaufenden, einander gegenüber liegenden Wänden (3) flankiert ist, die symmetrisch zu einer senkrecht zu dem Bodenstreifen (2) verlaufenden Mittenebene liegen, wobei die einander gegenüber liegenden Wände (3) an ihrem freien Ende einen kanalförmigen Rand (4) zum Befestigen eines Deckelabschnitts aufweisen, **dadurch gekennzeichnet,**
**dass** das obere Ende jeder der einander gegenüber liegenden Wände (3) einen geneigten Randbereich (5) aufweist, der aufwärts und zum Innern des Kabelkanals (1) geneigt ist, und dass an den Seitenenden des Bodenstreifens (2) in der Nähe des Schnittpunktes zwischen dem Bodenstreifen (2) und dem unteren Teil jeder der Bodenwände (3) ein keilförmiger Vorsprung (15) vorgesehen ist, dessen geneigte Seite (16) in Richtung der Mittenebene des Bodenstreifens (2) geneigt ist und dessen kurze Seite (17) parallel zu dem unteren Teil der Wand (3) und ko-planar zu einem kleinen Abschnitt (18) ist, der sich von der Innenfläche des geneigten Randbereichs (5) parallel zu der Wand (3) erstreckt.

2. Kabelkanal für elektrische Leitungen nach Anspruch 1, **dadurch gekennzeichnet, dass** der kleine Abschnitt (18) an seiner zur Innenfläche der Wand (3) gerichteten Fläche eine gezahnte Form (19) aufweist, deren Spitzen in Richtung der Innenfläche zeigen.

3. Kupplungselement zum Koppeln in Längsrichtung von zwei aneinandergrenzenden Kabelkanälen (1) nach Anspruch 1 oder 2, **dadurch gekennzeichnet, dass** es aus einem länglichen Teil (20) besteht, das einen L-förmigen geraden Querschnitt hat und am oberen Rand des längeren Schenkels (21) des L-förmigen Querschnitts elastische Flansche (22) aufweist, die durch die tatsächliche Form des Materials des länglichen Teils (20) gebildet werden, dass der untere Rand des längeren Schenkels (21) den kleineren Schenkel (23) des L-förmigen Querschnitts schneidet und dass der kleinere Schenkel (23) durch einen geneigten Abschnitt (24) gebildet wird, der in den längeren Schenkel (21) oberhalb des unteren Randes des letzteren übergeht, um eine Nase (25) und einen flachen Auflageabschnitt (27) zu bilden.

4. Kupplungselement nach Anspruch 3, **dadurch gekennzeichnet, dass** in einer mittleren Höhe des größeren Schenkels (21) des L-förmigen Querschnitts ein waagerecht liegendes Fenster (28) mit zwei Flügeln (29) gebildet ist, die aus der Ebene des größeren Schenkels (21) elastisch vorstehen.

## Revendications

1. Chemin pour conducteurs électriques, ledit chemin (1) étant fabriqué en extrudant une matière plastique synthétique et configuré comme une section en forme de canal constituée d'une bande inférieure (2) flanquée orthogonalement de deux parois opposées (3), qui sont symétriques par rapport à un plan central qui est perpendiculaire à ladite bande inférieure (2), lesdites parois opposées (3) formant sur leur extrémité libre un bord en forme de canal (4) pour placer une section de couvercle, **caractérisé en ce que** l'extrémité supérieure de chacune desdites parois opposées (3) a une zone de bordure inclinée (5), qui est inclinée vers le haut et vers l'intérieur dudit chemin (1), et aux extrémités latérales de ladite bande inférieure (2), près de l'intersection entre ladite bande inférieure (2) et la portion inférieure de chacune desdites parois opposées (3), une saillie en forme de coin (15) est disposée, dont le côté incliné (16) est incliné vers le plan central de ladite bande inférieure (2) et dont le petit côté (17) est parallèle à la portion inférieure de ladite paroi (3), et dans le même plan qu'une petite cloison (18) qui sort de la face intérieure de ladite zone de bordure inclinée (5) parallèlement à ladite paroi (3).

2. Chemin pour conducteurs électriques selon la revendication 1, **caractérisé en ce que** ladite petite cloison (18) a, sur sa face tournée vers la face intérieure de ladite paroi (3), une forme dentée (19) dont l'apex est dirigé vers ladite face intérieure.

3. Coupleur convenant pour coupler longitudinalement deux chemins (1) contigus selon les revendications 1 ou 2, **caractérisé en ce qu'**il est constitué d'une partie oblongue (20) qui a une section droite en L et, sur le bord supérieur de la partie plus grande (21) de la section en L, il a des rebords élastiques (22) ayant la forme réelle de la matière constituant ladite partie oblongue (20), le bord inférieur de ladite partie plus grande (21) coupant la partie plus petite (23) de la section en L, ladite partie plus petite (23) étant constituée d'une portion inclinée (24) qui relie ladite partie plus grande (21) au-dessus du bord inférieur de cette dernière afin de former un talon (25), et une portion de siège plat (27).

4. Coupleur selon la revendication 3, **caractérisé en ce que,** à une hauteur moyenne de ladite partie plus grande (21) de la section en L, une fenêtre (28) placée horizontalement est formée, munie de deux lames (29) qui font saillie élastiquement depuis le plan de ladite partie plus grande (21).
